# EUROPÄISCHE PATENTSCHRIFT

(11) **EP 1 193 169 B1**
(45) Veröffentlichungstag und Bekanntmachung des Hinweises auf die Patenterteilung: **13.09.2006**
(21) Anmeldenummer: 01119387.7
(22) Anmeldetag: 11.08.2001
(51) Int. Cl.: B62D 65/00

(54) **Modul mit Befestigungsvorrichtung**
Module with attaching device
Module avec dispositif de fixation

(30) Priorität: 30.09.2000 DE 10048530
(43) Veröffentlichungstag der Anmeldung: 03.04.2002
(73) Patentinhaber: Dr.Ing. h.c.F. Porsche Aktiengesellschaft, 70435 Stuttgart (DE)
(72) Erfinder: Silber, Kurt, 71384 Weinstadt (DE); Reichling, Hermann, 50674 Köln (DE)

(56) Entgegenhaltungen:
- DE-A- 3 836 374
- DE-A- 19 632 418
- US-A- 5 061 108
- US-A- 5 533 780

## Beschreibung

Die Erfindung betrifft ein Modul mit Befestigungseinrichtung nach dem Oberbegriff des Patentanspruchs 1.

An Fahrzeugen werden Module, die in aller Regel aus einem Bauelement oder einer Baugruppe und einer die Bauelemente bzw. die Baugruppe zu einem Modul zusammenfassenden Konsole bestehen, mittels Verschraubungen an einer Karosserie des Fahrzeuges befestigt. Diese Art der Befestigung ist preisgünstig und erlaubt gleichzeitig eine genaue Positionierung der Module. Nachteilig ist jedoch, dass bei ungünstigen Einbauverhältnissen die Befestigungspunkte nicht frei zugänglich sein können und auf diese Weise eine Montage oder Vormontage erschwert ist. Eine derartige Anordnung ist beispielsweise aus der EP 0 786 367 A2 bekannt, die ein Kraftfahrzeug mit einer bugseitigen Kühleranordnung zeigt, bei der die Befestigung eines Kühlermoduls durch Aufstecken auf Befestigungspunkte und anschließendes Sichern mit Muttern erfolgt.

Aus der US 5,533,780 ist eine Befestigungsvorrichtung für ein Karosseriebauteil bekannt geworden, bei der Befestigungspunkte als langgestreckte Öffnungen ausgebildet sind, um Toleranzen auszugleichen.

Aus der US 5,061,108 A die den Oberbegriff des Anspruchs 1 definiert, geht eine Befestigungseinrichtung für ein Kunststoff-Verkleidungselement an Kraftfahrzeugen hervor, bei der das Verkleidungselement mit langgestreckten, seitlichen Öffnungen versehen ist. Das Verkleidungsteil wird seitlich auf ein anderes Verkleidungsteil, das zu den Öffnungen korrespondierende Nasen aufweist, aufgeschoben, so dass die Nasen in die Öffnungen eingreifen. Durch Längsverschieben des Verkleidungsteiles greifen die Nasen schließlich in endseitige, schlüssellochförmige Öffnungen ein, so dass das Verkleidungsteil sicher gehalten ist. Diese Position des Verkleidungsteiles wird durch eine Schraube gesichert.

Die DE 196 32 418 A1 zeigt eine Frontgrillbefestigungskonstruktion, bei der Verkleidungselemente entgegen der Schwerkraft nach unten geöffnete Schlüsselloch-Öffnungen aufweisen. Durch Aufschieben auf korrespondierende Zapfen wird das Bauteil gesichert.

Schließlich ist aus der DE 38 36 374 A1 eine Kühlluftabdeckung für einen Fahrzeugkühler bekannt, bei der Lamellen über Hebel und Zapfen bewegt werden, wobei die Zapfen in bogenförmigen Öffnungen zum Erreichen einer vorgegebenen Stellbewegung geführt sind.

Eine besondere Montagesituation liegt vor, wenn eine Durchtrittsöffnung zwischen der Karosserie und dem Modul nicht in der Befestigungsebene des Moduls liegt. In diesem Fall kann es durch Toleranzen im Modul wie in der Karosserie dazu kommen, dass die korrespondierenden Öffnungen in der Karosserie und im Modul nicht nahe genug aufeinander zu liegen kommen, um eine dichte Verbindung zu gewährleisten. Ein Toleranzausgleich kann zwar durch entsprechend vergrößerte Aufnahmeöffnungen für die Befestigungselemente am Modulträger vorgesehen werden. Nachteilig ist hier jedoch, dass nun das Modul gleichzeitig in der richtigen Position gehalten und die Befestigungselemente montiert werden müssen.

Dieses Problem wird durch die Merkmale des Patentanspruches 1 gelöst. Modulträger vorgeschlagen, Befestigungspunkte al

Eine vorteilhafte Weiterbildung der Erfindung ist im Unteranspruch beschrieben.

Es zeigen:
- Fig. 1: eine Ansicht auf ein erfindungsgemäßes Modul aus einer Ebene parallel zur Montageebene,
- Fig. 2: eine Ansicht von oben auf das Modul,

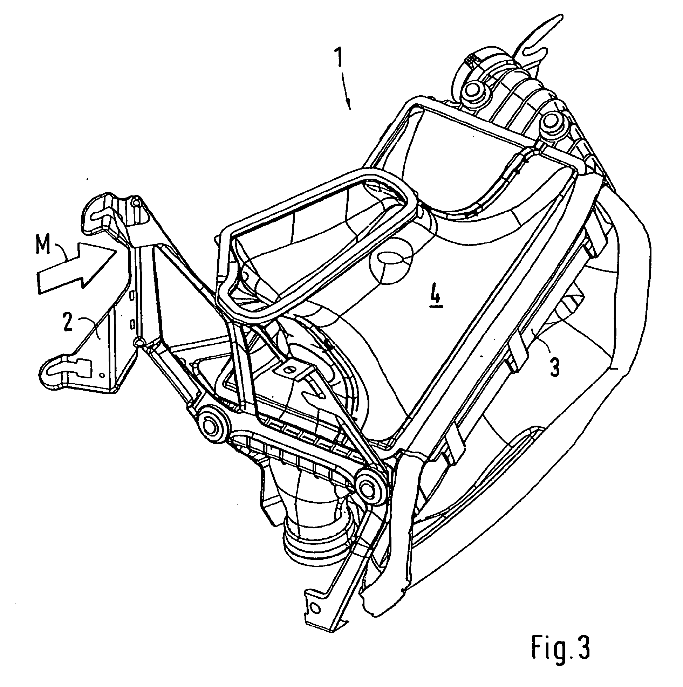

- Fig. 3: eine Schrägansicht des Moduls und
- Fig. 4: einen Teilschnitt nach der Linie IV-IV der Fig. 1.

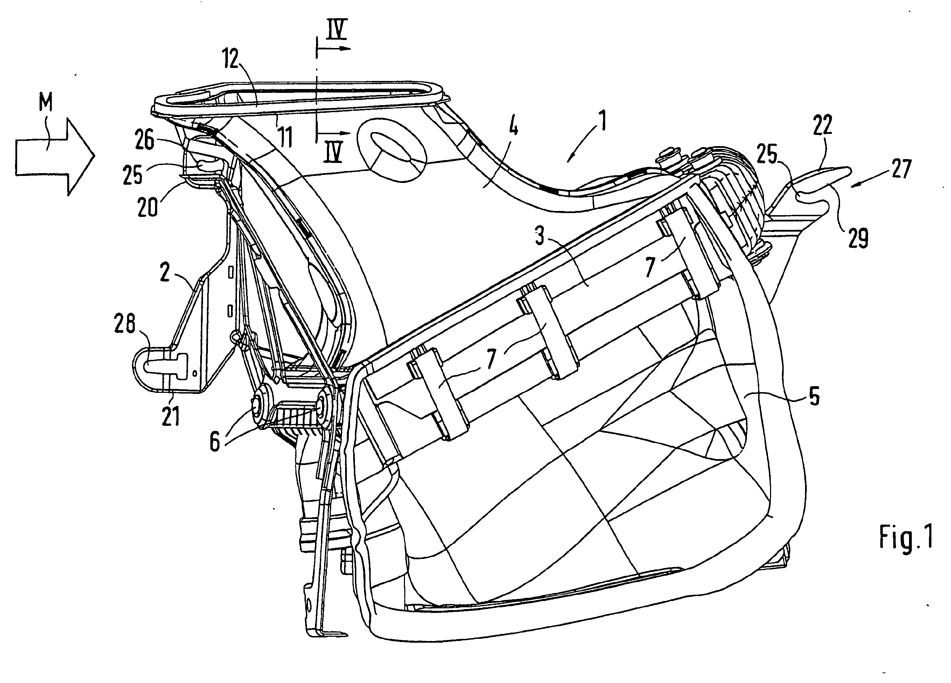

Das in Fig. 1 gezeigte Modul, hier ein Kühlermodul 1, besteht aus einem Modulrahmen 2, in dem ein Kühler 3 sowie zwei Luftführungselemente 4, 5 gehalten sind. Der Kühler 3 ist durch Schrauben 6 direkt mit dem Modulträger 2 verbunden, während die beiden Luftführungselemente 4, 5 über Klammern 7 am Kühler 3 gehalten sind. Das erste Luftführungselement 4 ist hierbei stromauf und das zweite Luftführungselement 5 stromab des Kühlers 3 angeordnet.

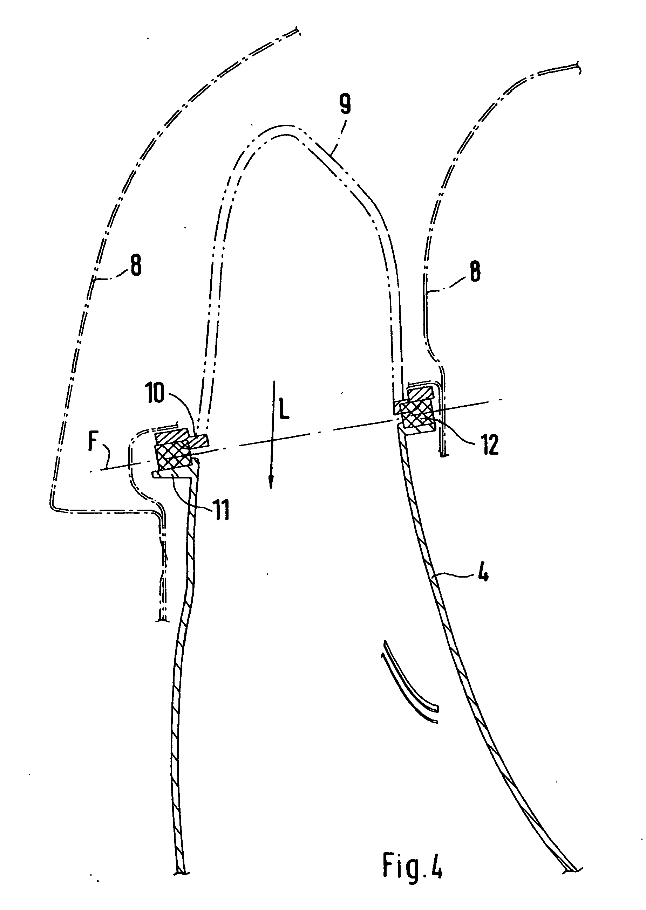

Fig. 4 zeigt in einem senkrechten Schnitt das erste Luftführungselement 4 in seiner montierten Position. In einer Karosserie 8 eines nicht näher gezeigten Fahrzeuges ist ein Kanal 9 vorgesehen, durch den ein Luftstrom in Pfeilrichtung L in das erste Luftführungselement 4 hineinströmt. Am Kanal 9 ist eine erste Flanschfläche 10 vorgesehen, die in einer Flanschebene F parallel zu einer korrespondierenden, zweiten Flanschfläche 11 des ersten Luftführungselementes 4 angeordnet ist. Zwischen den Flanschflächen 10, 11 ist eine Dichtung 12 angeordnet. Die Flanschflächen 10, 11 stellen korrespondierende Öffnungen in der Karosserie 8 und im Modul 1 dar.

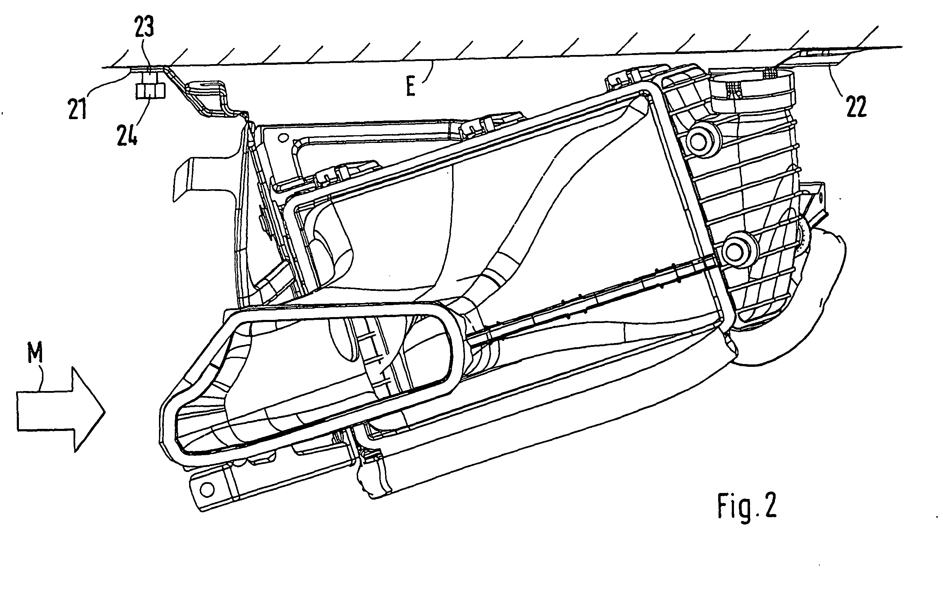

Die Montagerichtung M des Moduls 1 ist in Fig. 1 mit einem Pfeil gekennzeichnet. Wie in Fig. 2 zu erkennen ist, ist die Flanschebene F parallel zur Montagerichtung M, aber senkrecht zu einer Montageebene E angeordnet.

Am Montagerahmen 2 sind Befestigungspunkte 20, 21 und 22 vorgesehen. Die Befestigungspunkte 20, 21 und 22 werden über an der Karosserie 8 durch Schweißen befestigte Gewindebolzen 23 geschoben und dann durch Befestigungselemente, hier Gewindemuttern 24, befestigt. Die Gewindebolzen 23 sind senkrecht auf der Montageebene E und damit quer zur Montagerichtung M angeordnet.

An den Befestigungspunkten 20 und 22 sind als Kurvenbahnen 25 ausgebildete langgestreckte Öffnungen angeordnet. Ein Endbereich 26 der Kurvenbahnen 25 ist jeweils entgegen der Schwerkraft nach oben gerichtet. Die Kurvenbahn 25 des dritten Befestigungselementes 22 ist darüber hinaus in Form einer Einführhilfe 27 verlängert, indem eine Flanke 29 der Kurvenbahn 25 fingerartig verlängert und die Einführhilfe 27 insgesamt trichterförmig ausgebildet ist, um so das Erfassen des zugeordneten Gewindebolzens 23 zu erleichtern.

Beide Kurvenbahnen 25 sind so ausgebildet, dass sich bei einer Bewegung des Moduls 1 in Montagerichtung M gleichzeitig eine Bewegung nach oben ergibt. Im Zuge dieser Bewegung wird die zweite Flanschfläche 11 an die karosserieseitige erste Flanschfläche 10 herangeführt und damit die Dichtung 12 unter leichte Vorspannung gesetzt.

Eine langgestreckte Öffnung 28 des Befestigungselements 21 ist hingegen gerade ausgeführt, wobei die Breite der langgestreckten Öffnung 28 deutlich größer als der Durchmesser des zugeordneten Schweißbolzens 23 gewählt ist. Der Befestigungspunkt 21 dient damit ausschließlich zum Festlegen des Modulträgers 2 an der Montageebene E und trägt nicht zur Bewegung des Moduls 1 während des Montagevorganges bei.

## Patentansprüche

1. Modul (1) mit Befestigungseinrichtung zur Befestigung an einer Karosserie (8) wobei Befestigungspunkte (20, 22) des Moduls (1) als gleichgerichtete langgestreckte Öffnungen (25) ausgeführt sind, wobei
- die Öffnungen (25) seitlich geöffnet sind,
- wenigstens an einer der langgestreckten Öffnungen (25) wenigstens eine Flanke (29) der langgestreckten Öffnung (25) als Einführhilfe ausgebildet ist,
- die langgestreckten Öffnungen (25) wenigstens teilweise als Kurvenbahn ausgebildet sind,
**dadurch gekennzeichnet, dass**
- Endbereiche (26) der Kurvenbahnen (25) entgegen der Schwerkraft nach oben gerichtet sind,
- die Kurvenbahnen (25) so ausgebildet sind, dass während des Montagevorganges eine Bewegung des Moduls (1) nach oben erreicht ist.

2. Modul nach Anspruch 1, **dadurch gekennzeichnet, dass** das Modul (1) aus einem Kühler (3) mit stromauf und stromab angesetzten Luftführungselementen (4, 5) besteht, die in einem Modulrahmen (2) gehalten sind, das an einem der Luftführungselemente (4) eine Öffnung vorgesehen ist, die in der montierten Position des Moduls (1) auf einer korrespondierenden Öffnung (10) einer Karosserie (8) aufliegt, wobei eine Ebene (F) der Öffnungen (10, 11) im Wesentlichen senkrecht zu einer Montageebene (E) des Modul (1) angeordnet ist.

## Claims

1. A module (1) with an attachment device for attachment to a vehicle body (8), wherein attachment points (20, 22) of the module (1) are constructed as equidirectional, elongate openings (25), wherein
- the openings (25) are laterally open,
- at least in one of the elongate openings (25) at least one flank (29) of the elongate opening (25) is formed as an insertion aid,
- the elongate openings (25) are at least partly formed as a curved path,
**characterised in that**
- end regions (26) of the curved paths (25) are directed upwards against the force of gravity,
- the curved paths (25) are formed so that an upwards movement of the module (1) is produced during the mounting process.

2. A module according to claim 1, **characterised in that** the module (1) comprises a radiator (3) with air conduction members (4, 5) which are connected upstream and downstream and held in a module frame (2), **in that** an opening is provided in one of the air conduction members (4) and lies on a corresponding opening (10) in a vehicle body (8) when the module (1) is in its mounted position, wherein a plane (F) of the openings (10, 11) is arranged substantially perpendicularly to a mounting plane (E) of the module (1).

## Revendications

1. Module (1) avec dispositif de fixation pour la fixation sur une carrosserie (8), où des points de fixation (20, 22) du module (1) sont exécutés comme ouvertures oblongues (25) de même direction,
les ouvertures (25) étant ouvertes latéralement,
un flanc (29) au moins de l'ouverture oblongue (25) étant conformé comme aide à l'insertion sur une des ouvertures oblongues (25) au moins,
les ouvertures oblongues (25) étant au moins partiellement conformées comme glissière courbe,
**caractérisé en ce que**
des zones terminales (26) des glissières courbes (25) étant dirigées vers le haut contre la force de gravité,
les glissières courbes (25) sont formées de manière à permettre un mouvement du module (1) vers le haut pendant le montage.

2. Module selon la revendication 1, **caractérisé en ce que** le module (1) se compose d'un radiateur (3) avec des éléments de guidage d'air (4, 5) appliqués en amont et en aval, maintenus dans un cadre de module (2), **en ce qu'**une ouverture est prévue sur un des éléments de guidage d'air (4), laquelle repose sur une ouverture correspondante (10) d'une carrosserie (8) en position montée du module (1), un plan (F) des ouvertures (10, 11) étant disposé essentiellement perpendiculairement à un plan de montage (E) du module (1).
